# EUROPEAN PATENT SPECIFICATION

(11) **EP 0 931 007 B1**
(45) Date of publication and mention of the grant of the patent: **03.01.2001**
(21) Application number: 97942820.8
(22) Date of filing: 03.10.1997
(51) Int. Cl.: B65G 19/08, B65G 19/20, B65G 19/22, B65G 19/24

(54) **CONVEYOR WIRE AND METHOD FOR THE MANUFACTURE OF SUCH CONVEYOR WIRE**
DRAHTFÖRMIGER FÖRDERER SOWIE VERFAHREN ZU SEINER HERSTELLUNG
FIL METALLIQUE TRANSPORTEUR ET SON PROCEDE DE FABRICATION

(30) Priority: 09.10.1996 DK 111396
(43) Date of publication of application: 28.07.1999
(73) Proprietor: Skiold Echberg A/S, 8653 Them (DK)
(72) Inventor: ECHBERG, Ingolf, DK-8680 Rye (DK)
(74) Representative: Nielsen, Leif
(86) International application number: DK9700424
(87) International publication number: WO9815479

(56) References cited:
- EP-A- 0 145 055
- EP-A- 0 156 419
- WO-A-89/10500
- FR-A- 1 549 145
- GB-A- 1 511 996
- DERWENT'S ABSTRACT, No. A-8954K/03, week A03; & SU,A,908 683 (SAFRONOV V G), 5 March 1982.
- DERWENT'S ABSTRACT, No. 91-108441/15, week 9115; & SU,A,1 585 249 (SAFRONOV V G), 15 August 1990.

## Description

### Background of the invention

The present invention relates to a conveyor consisting of a flexible wire, which is provided with scraping elements equidistantly spaced and crosswise positioned along the length of the wire onto which they are moulded.

The wire is intended for use in a scraping conveyor and is provided for conveying material through a conveying duct and is conveyed in a closed circuit which extends at least partly in the conveying duct, the wire being driven by at least one driving wheel having engaging means on its periphery engaging the scraping elements.

The invention also relates to a method for manufacturing such a conveyor wire.

Conveyor wires of the kind mentioned in the introduction are often used in arrangements for automatic conveyance of fodder in pipe systems from a silo to fodder dispensers in a stable. The invention will be explained specifically in connection with such a conveyor wire. However, the conveyor wire may also be used for other purposes such as conveying liquids and other products which may be characterised fairly as having a fluidized condition inside transport ducts, e.g. gravel, flour and the like.

It is known to manufacture a conveyor wire with a flexible steel wire around which moulded scraping elements in the form of plastic pieces are moulded. When the wire is pulled through transport ducts which will often be made of closed pipes the plastic pieces will carry the fodder with them through the pipe. In this way the fodder may be moved through the closed circuit from a supply station situated in the immediate presence of a silo for a supply station where the fodder is delivered through delivery apertures in the pipe of the scraping conveyor in order to fill a fodder dispenser or a fodder trough. An arrangement of which such a known scraping conveyor forms a part is known among others from the description of International Patent Application No. PCT/DK82/00088 (WO-A-83 01245).

It has also been known to use chains instead of steel wires as well as it has also been known to use helically shaped conveyors for conveying fodder through the scraping conveyor. In the most common constructions, however, steel wires are used which are provided with plastic pieces. This is due to the fact, that in conveying arrangements requirements will exist for the passage of the wire around turning wheels, driving wheels etc., which have a relatively small diameter. Such a small diameter can not be used if helically shaped conveyors are utilised. By using steel wires a problem has appeared since some threads in the steel wire break in the area just beside the scraping elements moulded onto the wire. After some time of use the thread in the steel wire will break off and become mixed with the fodder. This implies a risk for the animals as well as it also implies a weakening of the strength of the conveyor wire.

Conveyor wires in which steel wires are used have also a limited field of use in conveyor arrangements with very long stretches of transportation. As the plastic pieces only may resist a limited tensile force before they are released from the metal wire, a risk thus is that the plastic pieces are loosened from the steel wires when the engagement means of the driving wheels engage the plastic pieces in order to drive the endless scraping conveyor and have to transmit very great forces due to the long stretches of transportation and due to large amounts of fodder.

As a solution to some of the problems existing with the known conveyor wires, proposals for coating the wire between successive plastic pieces have been suggested. Such a coating has given a partial solution of the problem with contamination of the animal fodder. However, it has turned out that the applied coating will also break at the transition between the wires and the pieces. Thus, a risk will still exists that broken pieces of thread may be mixed with the animal fodder as well as the strength of the conveyor wire will still be weakened.

It has also been proposed to use nylon wires instead of steel wires. However, because of extensibility and elasticity in such wires a risk will exist that the scraping elements are not placed correctly in driving wheels and turning wheels. This gives rise to interruptions of the operation.

Furthermore, problems have appeared in connection with moulding the plastic pieces on the nylon wires with sufficient strength without risk of weakening the strength of the wire. The plastic pieces are usually made of polyester having a temperature of about 250°C, which substantially corresponds to the melting temperature of the nylon wires.

Other kinds of conveyor wires have been suggested where it is attempted to solve the problem of making the scraping elements firmly fixed on the flexible wire.

Thus, in EP-A-0659661 it has been suggested to manufacture wires and scraping elements of well-defined materials which may be welded together. These are only possible to design with very few materials. In EP-A-0145055 a method is suggested, which makes is possible to cast in scraping elements on a cable in an area where the latter has undergone an elastic cross-section deformation. With this construction a loosening of the scraping elements from the wire is avoided because of the elongation the wire will undergo during use. However, this requires that the wire is not exposed to large tensions during use which may cause a cross-sectional deformation which makes loosening possible.

From EP-A-0156419 a conveyor wire is known in which it has been possible to provide the scraping elements at predetermined constant intervals along a flexible wire. However in order to secure the scraping elements the wire comprises nodules which are arranged along the length of the wire. The nodules are determining the position of the scraping elements which could be arranged above or between the thickenings provided by the nodules. The construction is rather complex seeing that the wire should be provided with both nodules and scraping elements. There is no disclosure relating to mutual relationship between material properties for the material of the scraping elements and the wire.

It is the object of the present invention to provide a solution to the above problems and drawbacks by indicating a conveyor wire and a method for manufacture thereof where scraping elements are fixed in a safe way and which is suitable for use in long scraping conveyors in which small radii in driving wheels and turning wheels also appear.

According to the present invention this is obtained by a conveyor wire according to the first part of claim 1 which is characterised in that the wire is made wholly or partly of synthetic fibre strands, in that the wire having essentially a constant cross section is provided with a cross section reduction achieved by forcing a tension on the wire in each section where a scraping element is moulded, and in that the scraping elements are made of a material having a melting temperature which is lower than the carbonisation temperature of the synthetic fibre strands.

The method according to the first part of claim 7 is according to the invention characterised in that a wire is formed from synthetic fibre strands, in that a reduction of the wire having essentially a constant cross-section is effected in each section where a scraping element is to be moulded by forcing a tension on the wire and in that the scraping elements are moulded or welded on the synthetic fibre wire at a temperature lower than the carbonisation temperature of the synthetic fibre strands.

As a synthetic fibre wire is used it will be possible to expose the wire to a tensile force during the moulding or welding of the scraping elements. Such a tensile force is not dependent on an elastic elongation. A straightening out of the used fibre strands will take place so that the cross-sectional area of the wire will become smaller during at the moulding. If braided fibre strands are used a greater straightening out of the fibres may be established and thereby a greater change in the cross-section area.

Such a reduction of the area is possible even if fibres not having an elastic elongation are used. It is preferred that the fibres show an elongation which is below 2%. When a wire has been taken into use a certain elongation may occur so that a reduction of the length of the wire is performed after a short running in.

Since the scraping element material, preferably plastic, has a melting temperature that is lower than the temperature by which the synthetic fibres carbonise, there will be no risk for any weakening of the wire at the moulding of the scraping elements. Synthetic fibres, e.g. paraaramide fibres, are resistant up to a high temperature, in the magnitude of 500°C before carbonisation occurs. As synthetic fibres also keep their strength even under a long term high thermic action it will be possible to mould scraping elements of plastic materials having a high degree of melting and which therefore also have better wear properties. Thus it will be possible to achieve firmly positioned scraping elements which at the same time have better wear properties. Thus, there will be less risk of contamination of the fodder due to worn parts of the scraping elements. Thus it will be possible to mould scraping elements of polyester which only melts at temperatures in the range 250°C - 270°C without the risk of weakening the strength of the wire, and where a safe melting is achieved simultaneously so that the plastic material will be able to perform a partial engagement of the synthetic fibres. Hereby a better fastening to the wire is achieved and thereby the possibility of manufacturing a conveyor wire with greater length.

Preferably, the wire will be made of superfibres like high-tenacity paraamidfibres. These fibres have very good bending qualities and great wearability. Hereby it is ensured that it is possible to manufacture conveyor wires which may extend around driving wheels and turning wheels with small radius and at the same time the risk of fibres breaking will be negligible. The risk of contamination of the fodder is therefore almost eliminated and the conveyor wire will keep its full strength even after a long period of use.

The synthetic fibres have a very low elongation and elasticity. A risk of operation stoppage will therefore not exist due to wrong positioning of the scraping elements in relation to driving wheels and turning wheels.

It is preferred that the flexible wire is formed by long braiding of a number of fibre strands as the smallest extension will occur even when very great tensile forces are acting in the wire. A somewhat greater elongation may occur in short braided wires because of the straightening of the fibre strands occurring when a tensile force is acting in the wire. However, in production it will be possible to take into account the straightening of the braided fibre strands occurring when the conveyor wire is in use, so that the scraping elements are placed in correct position in relation to the forces occurring in the conveyor wire in a normal state of use.

Due to the strength in the braided synthetic fibre wire it becomes possible to use a pulling wire according to the invention in very long conveyor systems, where until now it has been necessary to use scraping conveyors built up around a chain. Thus it will be possible to use the conveyor wire according to the invention in endless circuits that are used for fodder systems in stables having lengths up to 200 m. For reasons of strength it has previously been necessary to use chains in such ring systems, a system which is very expensive and which cannot be used in connection with driving wheels and turning wheels having a small diameter.

If scraping elements are used which at their central part have elongations extending in the longitudinal direction of the wire it will be possible to achieve a moulding or welding over a greater length and thereby a more firm connection between the scraping element and the wire. Hereby it is possible to transmit greater tensile forces. The scraping elements will usually be saucer-formed but may alternatively be shaped as cylindrical plates. They may be provided with rounded comers or sharp corners at their outer periphery.

It is preferred to make the scraping elements of polyester plastic. However, it is also possible to use plastic materials selected among polypropylenes or polyurethanes or other plastic materials having corresponding properties. Alternatively it will also be possible to manufacture the scraping elements of metallic or ceramic materials.

Only it has to be ensured, that the melting temperature of such materials is lower than the temperature at which the synthetic fibres carbonise.

### Description of the drawing.

The invention will now be explained in more detail with reference to the accompanying schematic drawing, wherein
- Fig. 1: shows a scraping conveyor in which a conveyor wire according to the invention forms a part, and
- Fig. 2: shows a partial view of a part of a conveyor wire according to the invention.

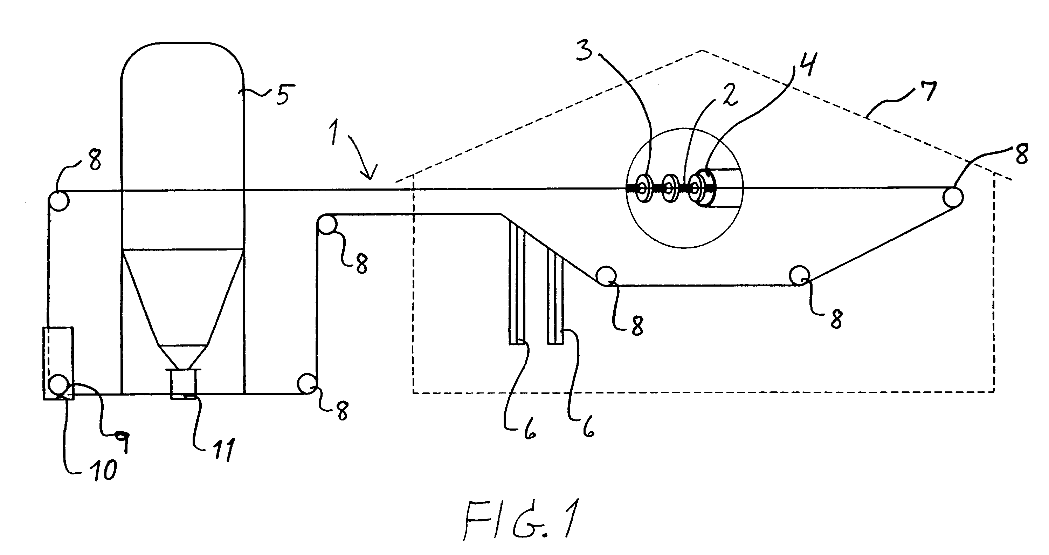

In fig. 1 a scraping wire 1 is shown. The scraping wire or conveyor 1 comprises a flexible wire 2 provided with scraping elements 3 equally distributed over the length of the wire for conveying material through a conveying duct 4. The scraping elements consist of circular saucer-formed plastic pieces fastened to the flexible wire 2. The conveyor duct 4 is constituted by a circular pipe with an inner diameter which substantially corresponds to the outer diameter of the scraping elements 3.

In fig. 1 the scraping conveyor 1 is shown in an application for conveying fodder from a silo 5 to feeding stations 6. The feeding stations 6 may be fodder dispensers for livestock, such as pigs, cows, chickens and the like which are in a stable 7 in the immediate vicinity of the silo 5. The conveyor wire 2 extends around turning wheels 8 together with a driving wheel 9, which is situated in a driving station 10. The driving wheel 9 and the turning wheels 8 are arranged for engagement with the scraping elements 3. The conveyor wire 2 passes through a feeding station 11 where the fodder from the silo is conveyed into the conveyor duct 4. The conveyor duct 4 will in a manner known to a skilled in the art be connected with the feeding dispensers 6 in order to fill these when the scraping conveyor is operating.

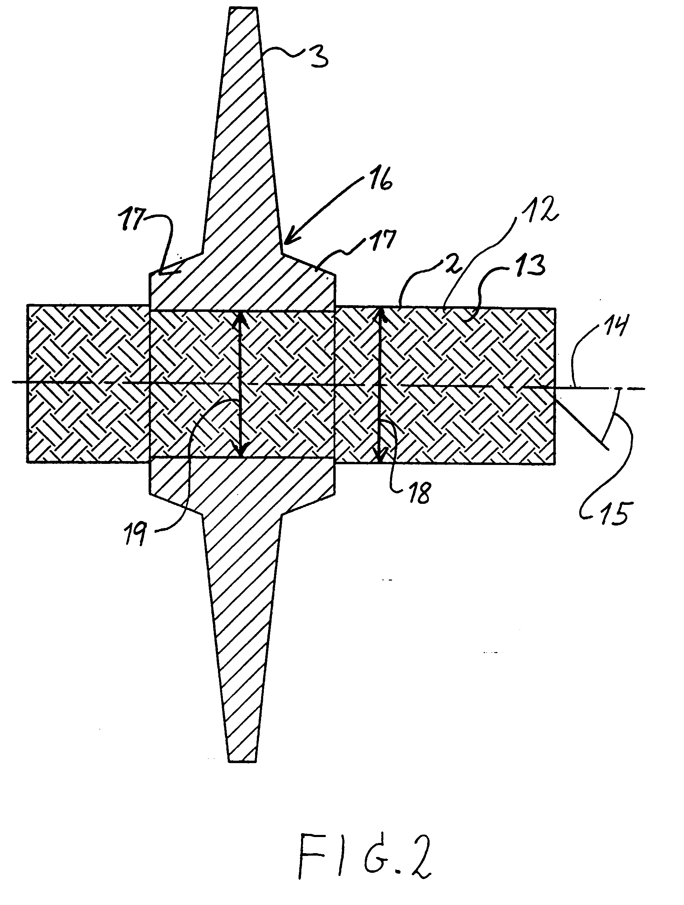

In fig. 2 it is illustrated that the wire 2 consists of a braided wire. Thus, the wire 2 consists of a number of fibre strands 12 and 13 extending mutually crosswise and forming a braiding. The fibre strands 12,13 are preferably braided with long braiding and may in practice have an angle of inclination in relation to a longitudinal axis 14 through the wire 2 which is smaller than the angle of inclination 15 illustrated in fig. 2. The braided wire 2 is preferably manufactured by braiding the fibre strands so that a hollow occurs inside the wire 2. The shown wire is made from high-tenacity paraamid fibres. These fibres are resistant up to 500°C before an incipient carbonisation occurs. The plastic pieces are made from polyester which melts at a temperature of approximately 240°C - 280°C.

The scraping element 3 is saucer-shaped and has elongations 17 at its central part 16, which elongations 17 extend in the longitudinal direction of the wire 2. Hereby a greater contact area is obtained between the wire 2 and the scraping element 3.

As appears from fig. 2, the wire 2 will have a greater diameter 18 in the areas between subsequent scraping elements 3 than the diameter 19 of the wire 2 at its passage through the scraping element 3. At the passage through the scraping element 3 the fibre strands 13 are straightened so that the angle of inclination in this area is less than the indicated angle 15 of the fibre strands situated between subsequent scraping elements 3. This is achieved by forcing a tension in the wire 2 before a scraping element is moulded or welded on the wire. Because of the straightening of the fibres and the possibility of the fibres to be pressed into the hollow interior of the wire 2 a cross-section reduction is obtained of the wire down to the diameter 19 in the section where the scraping element 3 is moulded. As the mould is removed when the scraping element 3 is stabilised, the wire 2 will not be able to return to its initial diameter 18 when the tension in the wire 2 is released.

## Claims

1. A conveyor wire (1) consisting of a flexible wire (2), which is provided with scraping elements (3) equidistantly spaced and crosswise positioned along the length of the wire onto which they are moulded, **characterised** in that the wire (1) is made wholly or partly of synthetic fibre strands (12,13), in that the wire (2) having essentially a constant cross section is provided with a cross section reduction achieved by forcing a tension on the wire (2) in each section where a scraping element (3) is moulded, and in that the scraping elements are made of a material having a melting temperature which is lower than the carbonisation temperature of the synthetic fibre strands (12,13).

2. A conveyor wire according to claim 1,**characterised** in that the wire (1) is a braided wire.

3. A conveyor wire according to claim 1 or 2, **characterised** in that the scraping elements (3) are made of a plastic material having an elongation less than 2% during use and which is selected among polyethylenes, polypropylenes, polyurethanes, and polyesters.

4. A conveyor wire according to claim 1, 2, or 3, **characterised** in that the material of the scraping elements (3) at least partly is moulded in between the single fibres of the wire.

5. A conveyor wire according to any of the preceding claims, **characterised** in that the wire (1) is made of aramid fibres, preferably high tenacity paraaramid fibres.

6. A conveyor wire according to any of the preceding claims, **characterised** in that the wire (1) has been long braided from a number of fibre strands (12,13).

7. A method for manufacturing a conveyor wire (1) consisting of a flexible wire (2), which is provided with equidistantly spaced and crosswise positioned scraping elements (3) along the length of the wire, **characterised** in that the wire (2) is formed from synthetic fibre strands (12,13), in that a reduction of the wire having essentially a constant cross-section is effected in each section where a scraping element (3) is to be moulded by forcing a tension on the wire (2) and in that the scraping elements (3) are moulded or welded on the synthetic fibre wire (2) at a temperature lower than the carbonisation temperature of the synthetic fibre strands (12,13).

8. A method according to claim 7, **characterised** in that the wire (2) is braided, preferably by long braiding of a number of fiber strands.

9. A method according to claim 7 or 8,**characterised** in that a tension is induced at least in a section of the wire (2) whereon a scraping element is to be placed so that there is created a reduction of the cross section of said section, that the scraping element (3) is moulded or welded on, that the scraping element is cooled, that mould is removed when the scraping element is stabilised, and that the tension is released.

10. A method according to any of the claims 7 - 9, **characterised** in that high tenacity paraaramid fibres are used for the wire (2) and polyester for the scraping elements (3), and that the moulding takes place at a temperature between 240°C and 280°C.

## Patentansprüche

1. Drahtförmiger Förderer (1), welcher aus einem flexiblen Draht (2) besteht, der mit Kratzelementen (3) ausgestattet ist, welche äquidistant beabstandet und kreuzweise entlang der Länge des Drahtes, auf dem sie angeformt sind, positioniert sind, dadurch gekennzeichnet, dass der Draht (1) ganz oder teilweise aus synthetischen Fasersträngen (12, 13) hergestellt ist, dass der Draht (2), der einen im wesentlichen konstanten Querschnitt aufweist, mit einer Querschnittsverringerung, die durch Anlegen einer Spannung an den Draht (2) erreicht wird, in jedem Abschnitt, an dem ein Kratzelement (3) angeformt ist, versehen ist und dass die Kratzelemente aus einem Material hergestellt sind, welches eine Schmelztemperatur aufweist, die niedriger ist als die Karbonisierungstemperatur der synthetischen Faserstränge (12, 13).

2. Drahtförmiger Förderer nach Anspruch 1, dadurch gekennzeichnet, dass der Draht (1) ein geflochtener Draht ist.

3. Drahtförmiger Förderer nach Anspruch 1 oder 2, dadurch gekennzeichnet, dass die Kratzelemente (3) aus einem Kunststoffmaterial gemacht sind, welches während der Verwendung eine Längsausdehnung von weniger als 2 Prozent aufweist und welches unter der Gruppe, bestehend aus Polyethylenen, Polypropylenen, Polyurethanen und Polyestern, ausgewählt ist.

4. Drahtförmiger Förderer nach Anspruch 1, 2 oder 3, dadurch gekennzeichnet, dass das Material der Kratzelemente (3) zumindest teilweise zwischen die einzelnen Fasern des Drahtes eingeformt ist.

5. Drahtförmiger Förderer nach einem der vorstehenden Ansprüche, dadurch gekennzeichnet, dass der Draht (1) aus Aramidfasern, vorzugsweise aus bruchfesten Paraaramidfasern, gemacht ist.

6. Drahtförmiger Förderer nach einem der vorstehenden Ansprüche, dadurch gekennzeichnet, dass der Draht (1) aus einer Anzahl an Fasersträngen (12, 13) lang geflochten ist.

7. Verfahren zum Herstellen eines drahtförmigen Förderers (1), welcher aus einem flexiblen Draht (2) besteht, der mit äquidistant beabstandeten und kreuzweise positionierten Kratzelementen (3) entlang der Länge des Drahtes ausgestattet ist, dadurch gekennzeichnet, dass der Draht (2) aus synthetischen Fasersträngen (12, 13) hergestellt wird, dass eine Verringerung des Drahtes, welcher einen im wesentlichen konstanten Querschnitt aufweist, in jedem Abschnitt ausgeführt wird, in dem ein Kratzelement (3) angeformt werden soll, indem an den Draht (2) eine Spannung angelegt wird, und dass die Kratzelemente (3) auf den synthetischen Faserdraht (2) bei einer Temperatur angeformt oder angeschweißt werden, welche niedriger ist als die Karbonisationstemperatur der synthetischen Faserstränge (12, 13).

8. Verfahren nach Anspruch 7, dadurch gekennzeichnet, dass der Draht (2) geflochten wird, vorzugsweise durch Langflechten einer Anzahl von Fasersträngen.

9. Verfahren nach Anspruch 7 oder 8, dadurch gekennzeichnet, dass mindestens in einem Abschnitt des Drahtes (2) eine Spannung angelegt wird, auf dem ein Kratzelement angeordnet werden soll, so dass eine Verringerung im Querschnitt des Abschnittes erzeugt wird, dass das Kratzelement (3) angeformt oder aufgeschweißt wird, dass das Kratzelement gekühlt wird, dass die Gußform entfernt wird, wenn das Kratzelement stabilisiert ist, und dass die Spannung gelöst wird.

10. Verfahren nach einem der Ansprüche 7 bis 9, dadurch gekennzeichnet, dass hochfeste Paraaramidfasern für den Draht (2) und Polyester für die Kratzelemente (3) verwendet werden und dass das Anformen bei einer Temperatur zwischen 240°C und 280°C stattfindet.

## Revendications

1. Câble de convoyage (1) se composant d'un câble flexible (2) qui est pourvu d'éléments formant raclettes (3) placés à égale distance, et positionnés de manière transversale sur la longueur du câble sur lequel ils sont moulés, caractérisé en ce que le câble (1) est formé en partie ou en totalité de brins de fibres synthétiques (12, 13), en ce que le câble (2), dont la section transversale est sensiblement constante, présente une réduction de ladite section transversale, assurée par l'application d'une tension sur le câble (2), dans chaque section dans laquelle l'élément formant raclette (3) est moulé, et en ce que les éléments formant raclettes se composent d'un matériau dont la température de fusion est inférieure à la température de combustion des brins de fibres synthétiques (12,13).

2. Câble de convoyage selon la revendication 1, caractérisé en ce que le câble (1) est un câble tressé.

3. Câble de convoyage selon la revendication 1 ou 2, caractérisé en ce que les éléments formant raclettes (3) se composent d'un matériau plastique présentant un allongement inférieur à 2 % pendant leur utilisation, et qui est sélectionné parmi des polyéthylènes, des polypropylènes, des polyuréthanes, et des polyesters.

4. Câble de convoyage selon la revendication 1, 2 ou 3, caractérisé en ce que le matériau des éléments formant raclettes (3) est au moins partiellement moulé entre les fibres uniques du câble.

5. Câble de convoyage selon l'une quelconque des revendications précédentes, caractérisé en ce que le câble (1) se compose de fibres d'aramide, et de préférence, de fibres de paraaramide de haute ténacité.

6. Câble de convoyage selon l'une quelconque des revendications précédentes, caractérisé en ce que le câble (1) est formé d'une longue tresse d'un certain nombre de brins de fibres (12, 13).

7. Procédé de fabrication d'un câble de convoyage (1) se composant d'un câble flexible (2), qui est pourvu d'éléments formant raclettes (3) placés à égale distance, et positionnés de manière transversale sur la longueur du câble, caractérisé en ce que le câble (2) est formé de brins de fibres synthétiques (12, 13), en ce qu'une réduction du câble (2), qui a essentiellement une section transversale constante, est assurée dans chaque section dans laquelle un élément formant raclette (3) doit être moulé en appliquant en force une tension sur le câble (2), et en ce que les éléments formant raclettes (3) sont moulés ou soudés sur le câble de fibres synthétiques (2) à une température inférieure à la température de combustion des brins de fibres synthétiques (12,13).

8. Procédé selon la revendication 7, caractérisé en ce que le câble (2) est tressé, de préférence, par un long tressage d'un certain nombre de brins de fibres.

9. Procédé selon la revendication 7 ou 8, caractérisé en ce qu'une tension est introduite dans au moins une section du câble (2) sur lequel doit être placé un élément formant raclette, de manière à créer une réduction de la section transversale de ladite section, en ce que l'élément formant raclette (3) est moulé ou soudé, que l'élément formant raclette est refroidi, que le moule est retiré lorsque l'élément formant raclette est stabilisé, et que la tension est relâchée.

10. Procédé selon l'une quelconque des revendications 7 à 9, caractérisé en ce l'on utilise des fibres de paraamide à haute ténacité pour le câble (2) et du polyester pour les éléments formant raclettes (3) et en ce que le moulage est effectué à une température comprise entre 240°C et 280°C.
